(19) Europäisches Patentamt
European Patent Office
Office européen des brevets

(11) **EP 4 425 110 A1**

(12) **EUROPEAN PATENT APPLICATION**
published in accordance with Art. 153(4) EPC

(43) Date of publication:
**04.09.2024 Bulletin 2024/36**

(21) Application number: **21964319.4**

(22) Date of filing: **16.11.2021**

(51) International Patent Classification (IPC):
*G01D 18/00* (2006.01)

(52) Cooperative Patent Classification (CPC):
**G01D 18/00**

(86) International application number:
**PCT/CN2021/131000**

(87) International publication number:
**WO 2023/087153 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LUO, Jie**
**Shenzhen, Guangdong 518129 (CN)**

• **LIU, Donghao**
**Shenzhen, Guangdong 518129 (CN)**
• **GU, Qiang**
**Shenzhen, Guangdong 518129 (CN)**
• **ZHUANG, Yuzheng**
**Shenzhen, Guangdong 518129 (CN)**
• **ZHANG, Yongsheng**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **CALIBRATION METHOD, DEVICE AND SYSTEM**

(57)  Embodiments of this application disclose a calibration method, apparatus, and system, and relate to the calibration field, to improve calibration efficiency of a new energy vehicle and an intelligent vehicle, and reduce calibration costs. A specific solution is as follows: First, an observation signal of a to-be-tested system is obtained. Next, a corresponding performance index is calculated based on the observation signal of the to-be-tested system. Then, an updated calibration parameter is obtained by using an optimization algorithm based on the performance index, a constraint condition, and at least one objective function, where the objective function indicates a function relationship between performance indexes. Finally, the updated calibration parameter is sent to a controller.

EP 4 425 110 A1

```
┌──────────────────────────────────────────────────────────┐
│  Obtain an observation signal of a to-be-tested system     │── S601
└──────────────────────────────────────────────────────────┘
                            │
┌──────────────────────────────────────────────────────────┐
│  Calculate a corresponding performance index based on the  │── S602
│  observation signal of the to-be-tested system             │
└──────────────────────────────────────────────────────────┘
                            │
┌──────────────────────────────────────────────────────────┐
│  Obtain an updated calibration parameter by using an       │── S603
│  optimization algorithm based on the performance index, a  │
│  constraint condition, and at least one objective function,│
│  where the objective function indicates a function         │
│  relationship between performance indexes                  │
└──────────────────────────────────────────────────────────┘
                            │
┌──────────────────────────────────────────────────────────┐
│  Send the updated calibration parameter to a controller    │── S604
└──────────────────────────────────────────────────────────┘
```

FIG. 6

**Description**

**TECHNICAL FIELD**

Embodiments of this application relate to the calibration field, and in particular, to a calibration method, apparatus, and system.

**BACKGROUND**

Vehicle calibration refers to a process of optimizing parameters in vehicle controller software to meet vehicle delivery requirements, related international standards and industry standards after components like a controller hardware, software and a related sensor are determined. At present, manual calibration is mainly used for the vehicle calibration.

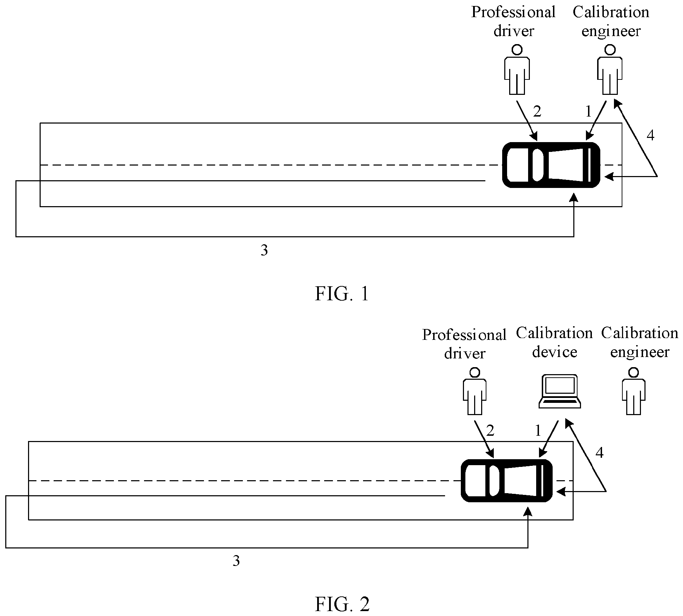

FIG. 1 is a schematic diagram of a manual calibration method. As shown in FIG. 1, the method includes the following steps: Step 1: A calibration engineer sets a calibration parameter based on experience, and downloads the calibration parameter to a controller by using a calibration tool. Step 2: A professional driver drives a vehicle for testing and collecting related data. Step 3: The professional driver drives the vehicle back to an initial position. Step 4: The calibration engineer performs data analysis based on the collected data and provides a suggestion on adjusting the calibration parameter.
During the manual calibration, calibration results of different calibration engineers vary greatly and consistency is poor. Therefore, a requirement for the calibration engineer is high. Moreover, it is difficult for the manual calibration to calibrate globally, and only optimal local performance can be guaranteed. Then, the manual calibration consumes a lot of manpower, material and financial resources. Therefore, the manual calibration has problems of high costs, poor effect and low efficiency.

**SUMMARY**

Embodiments of this application provide a calibration method, apparatus, and system, to improve calibration efficiency and reduce calibration costs.
The following technical solutions are used in embodiments of this application.
According to a first aspect, an embodiment of this application provides a calibration method. The calibration method includes: first, obtaining an observation signal of a to-be-tested system. Second, a corresponding performance index is calculated based on the observation signal of the to-be-tested system. Then, an updated calibration parameter is obtained by using an optimization algorithm based on the performance index, a constraint condition, and at least one objective function, where the objective function indicates a function relationship between performance indexes. Finally, the updated calibration parameter is sent to a controller.
Optionally, the to-be-tested system may be a system of a vehicle, or may be a system of another device. A specific type of the to-be-tested system and a specific device to which the to-be-tested system belongs are not limited in this embodiment of this application. That is, the calibration method provided in this application may be used to calibrate a vehicle, or may be used to calibrate another device.
Based on this solution, the observation signal of the to-be-tested system is obtained, a performance index is calculated by using the observation signal, and the updated calibration parameter is obtained by using the optimization algorithm based on the performance index, the constraint condition, and the at least one objective function. An entire calibration process may not require participation of a calibration engineer. Compared with manual calibration, it can effectively reduce vehicle calibration costs, and improve calibration effect and calibration efficiency.
With reference to the first aspect, in an implementation, the method further includes: The performance index includes an objective-type performance index and a subjective-feeling-type performance index, the at least one objective function includes at least one of an objective-type objective function or a subjective-type objective function, the objective-type objective function is a weighted sum of a plurality of objective-type performance indexes, a sum of weighting coefficients of the plurality of objective-type performance indexes is 1, the subjective-type objective function is a weighted sum of a plurality of subjective-feeling-type performance indexes, and a sum of weighting coefficients of the plurality of subjective-feeling-type performance indexes is 1.
Based on this solution, performance of the to-be-tested system is evaluated by establishing at least one objective function, where the at least one objective function includes at least one of the objective-type objective function or the subjective-type objective function, and the objective-type objective function is obtained by calculating and weighting based on the observation signal. The subjective-type objective function is obtained by weighting scores of a professional driver. Therefore, a calibration parameter obtained through optimization based on a multi-objective function not only enables a performance index of a vehicle to meet an industry standard, but also improves driving experience of a user.
With reference to the first aspect, in an implementation, the method further includes: determining a type of the calibration parameter. The type of the calibration parameter includes at least a Map type and a Table type. An initial coupling factor between calibration parameters is determined based on the type of the calibration parameter and an initial value of the calibration parameter.

Based on this solution, the type of the calibration parameter is determined, and calibration parameters of the Map type and the Table type are respectively fitted, so that a coupling relationship between calibration parameters of the Map type and a coupling relationship between calibration parameters of the Table type can be obtained. When the optimization algorithm is used for optimization, an optimized coupling factor may be used instead of directly optimizing the calibration parameter. Because a quantity of coupling factors is less than a quantity of calibration parameters, the quantity of calibration parameters can be reduced, optimization time can be reduced, and optimization efficiency can be improved.

With reference to the first aspect, in an implementation, the method further includes: obtaining an updated coupling factor by using the optimization algorithm based on the performance index, the constraint condition, the at least one objective function, and a coupling factor used before updating. The coupling factor used before updating includes the initial coupling factor.

Based on this solution, the optimized coupling factor may be used instead of directly optimizing the calibration parameter. In an optimization process of determining the calibration parameter, a calculation amount of the optimization algorithm can be reduced, optimization time can be reduced, and optimization efficiency can be improved.

With reference to the first aspect, in an implementation, the method further includes: A quantity of initial coupling factors is less than a quantity of calibration parameters.

Based on this solution, the optimized coupling factor may be used instead of directly optimizing the calibration parameter, and a quantity of coupling factors are less than the quantity of calibration parameters. Therefore, in an optimization process of determining the calibration parameter, a calculation amount of the optimization algorithm can be reduced, optimization time can be reduced, and optimization efficiency can be improved.

With reference to the first aspect, in an implementation, the method further includes: when the observation signal meets a first preset condition, performing data processing on the observation signal, and calculating the corresponding performance index based on a processed observation signal.

Optionally, the first preset condition may be a specified range associated with the observation signal. When the observation signal is within the specified range, the observation signal is processed, and when the observation signal is not within the specified range, the observation signal is not processed.

Optionally, the first preset condition may alternatively be a specified value associated with the observation signal. When the observation signal is greater than or equal to the specified value, the observation signal is processed, and when the observation signal is less than the specified value, the observation signal is not processed. Specific content and a form of the first preset condition are not limited in this embodiment of this application.

Based on this solution, the first preset condition is set, data that meets the first preset condition is processed, and data that does not meet the first preset condition is not processed. This can ensure that an observation signal that meets the condition participates in the optimization process of the calibration parameter, and accuracy of a calibration parameter obtained by using the optimization algorithm can be ensured.

With reference to the first aspect, in an implementation, the method further includes: generating exception alarm information when an exception occurs in a calibration process of the to-be-tested system, where the exception alarm information is used to prompt a user with the calibration exception.

Based on this solution, when an exception occurs in the calibration process, the exception alarm information is generated in time, to notify the user of the calibration exception, so that long time waiting can be avoided because an operator does not know that the calibration exception. The operator can continue to perform calibration after dealing with a related exception, and this can ensure calibration efficiency.

With reference to the first aspect, in an implementation, the method further includes: generating a calibration report when a value of the at least one objective function meets a second preset condition. The calibration report includes at least one of the performance index, objective function value distribution, an optimal calibration parameter, or an important observation pattern.

Optionally, the second preset condition may be a range of a preset objective function value. When the value of the at least one objective function falls within the range of the preset objective function value, a calibration report is generated. Specific content and a form of the second preset condition are not limited in this embodiment of this application.

Based on this solution, the second preset condition is set. After a calibration parameter that meets the second preset condition is determined, a calibration report may be generated. The operator can better summarize experience and understand current performance of the vehicle based on content of the calibration report.

With reference to the first aspect, in an implementation, the method further includes: The optimization algorithm includes at least one of the following: a Bayesian optimization algorithm, a particle swarm optimization algorithm, a genetic algorithm, and a machine learning algorithm.

Based on the solution, a Bayesian optimization algorithm, a particle swarm optimization algorithm, a genetic algorithm, or a machine learning algorithm is used to optimize the calibration parameter. Compared with manual calibration, not only more calibration parameters can be optimized, but also an optimization speed is faster. When the calibration parameter is determined by using the optimization algorithm, a calibration engineer is not required, and this can effectively reduce the calibration costs of the vehicle and improve the calibration effect and calibration efficiency.

With reference to the first aspect, in an implementation, the method further includes: The constraint condition may include at least one of a constraint condition of the observation signal, a constraint condition of the performance index, a constraint condition of an objective function value, or a constraint condition of the coupling factor between the calibration parameters.

Based on this solution, the constraint condition may include a plurality of constraint conditions. Optimization time of a calibration parameter can be shortened by using the plurality of constraint conditions, and better performance can be achieved when the calibration parameter determined by using the plurality of constraint conditions is applied to a device or a system.

With reference to the first aspect, in an implementation, the method further includes: sending prompt information to the controller, where the prompt information is used to prompt the user with at least one of a calibration start or a calibration end.

Optionally, the prompt information is sent to a controller of a to-be-calibrated device. The to-be-calibrated device may give a prompt to the user based on the prompt information. The prompt may include sound, light, and vibration. A specific type of prompt provided by the to-be-calibrated device to the user is not limited in this embodiment of this application.

Based on this solution, the calibration process can be more humanized by prompting the user to start or end calibration.

According to a second aspect, an embodiment of this application provides a calibration apparatus. The calibration apparatus includes a transceiver module and a processing module. The transceiver module is configured to obtain an observation signal of a to-be-tested system. The processing module is configured to calculate a corresponding performance index based on the observation signal of the to-be-tested system. The processing module is further configured to obtain an updated calibration parameter by using an optimization algorithm based on the performance index, a constraint condition, and at least one objective function, where the objective function indicates a function relationship between performance indexes. The transceiver module is further configured to send the updated calibration parameter to a controller.

With reference to the second aspect, in a possible implementation, the performance index includes an objective-type performance index and a subjective-feeling-type performance index, the at least one objective function includes at least one of an objective-type objective function or a subjective-type objective function, the objective-type objective function is a weighted sum of a plurality of objective-type performance indexes, a sum of weighting coefficients of the plurality of objective-type performance indexes is 1, the subjective-type objective function is a weighted sum of a plurality of subjective-feeling-type performance indexes, and a sum of weighting coefficients of the plurality of subjective-feeling-type performance indexes is 1.

With reference to the second aspect, in a possible implementation, the processing module is further configured to: determine a type of the calibration parameter, where the type of the calibration parameter includes a Map type and a Table type. The processing module is further configured to determine an initial coupling factor between calibration parameters based on the type of the calibration parameter and an initial value of the calibration parameter.

With reference to the second aspect, in a possible implementation, a quantity of initial coupling factor is less than a quantity of calibration parameters.

With reference to the second aspect, in a possible implementation, the processing module is specifically configured to obtain an updated coupling factor by using the optimization algorithm based on the performance index, the constraint condition, the at least one objective function, and a coupling factor used before updating, where the coupling factor used before updating includes the initial coupling factor.

With reference to the second aspect, in a possible implementation, the processing module is specifically configured to: when the observation signal meets a first preset condition, perform data processing on the observation signal, and calculate the corresponding performance index based on a processed observation signal.

With reference to the second aspect, in a possible implementation, the processing module is further configured to generate exception alarm information when an exception occurs in a calibration process of the to-be-tested system, where the exception alarm information is used to prompt a user with the calibration exception.

With reference to the second aspect, in a possible implementation, the processing module is further configured to: generate a calibration report when a value of the at least one objective function meets a second preset condition. The calibration report includes at least one of the performance index, objective function value distribution, an optimal calibration parameter, or an important observation pattern.

With reference to the second aspect, in a possible implementation, the optimization algorithm includes at least one of the following: a Bayesian optimization algorithm, a particle swarm optimization algorithm, a genetic algorithm, and a machine learning algorithm.

With reference to the second aspect, in a possible implementation, the constraint condition includes at least one of a constraint condition of the observation signal, a constraint condition of the performance index, a constraint condition of an objective function value, or a constraint condition of the coupling factor between the calibration parameters.

With reference to the second aspect, in a possible implementation, the transceiver module is further configured to send prompt information to the controller, where the prompt information is used to prompt the user with at least one of a calibration start or a calibration end.

According to a third aspect, an embodiment of this application provides a calibration device. The calibration device includes a memory and a processor. The memory is coupled to the processor. The memory is configured to store computer program code, and the computer program code includes computer instructions. When the processor executes the computer instructions, the calibration device performs the calibration method according to the first aspect.

According to a fourth aspect, an embodiment of this application provides a computer-readable storage medium, including instructions. When the instructions are run on a computer, the computer is enabled to perform the calibration method according to the first aspect.

According to a fifth aspect, an embodiment of this application provides a computer program product. When the computer program product is run on a computer, the computer is enabled to perform the calibration method according to the first aspect.

According to a sixth aspect, an embodiment of this application provides a calibration system. The calibration system includes a controller and the calibration apparatus according to the second aspect, and the controller is coupled to the calibration apparatus.

According to a seventh aspect, an embodiment of this application provides a vehicle. The vehicle includes a controller and the calibration apparatus according to the second aspect, and the controller is coupled to the calibration apparatus. Optionally, the vehicle may be a green car, an intelligent vehicle, or the like.

For descriptions of the second aspect, the third aspect, the fourth aspect, the fifth aspect, the sixth aspect, and the seventh aspect in this application, refer to the detailed description of the first aspect. In addition, for beneficial effects of the second aspect, the third aspect, the fourth aspect, the fifth aspect, the sixth aspect, and the seventh aspect, refer to analysis of beneficial effects of the first aspect. Details are not described herein again.

**BRIEF DESCRIPTION OF DRAWINGS**

FIG. 1 is a schematic diagram of a manual calibration method according to an embodiment of this application;
FIG. 2 is a schematic diagram of a calibration method according to an embodiment of this application;
FIG. 3 is a schematic diagram of a structure of a calibration system according to an embodiment of this application;
FIG. 4 is a schematic diagram of a structure of a calibration apparatus according to an embodiment of this application;
FIG. 5 is a schematic diagram of another structure of a calibration system according to an embodiment of this application;
FIG. 6 is a schematic flowchart of a calibration method according to an embodiment of this application;
FIG. 7 is another schematic flowchart of a calibration method according to an embodiment of this application;
FIG. 8 is an application schematic diagram of a calibration method according to an embodiment of this application;
FIG. 9 is another application schematic diagram of a calibration method according to an embodiment of this application;
FIG. 10 is still another schematic flowchart of a calibration method according to an embodiment of this application;
FIG. 11 is yet another schematic flowchart of a calibration method according to an embodiment of this application;
FIG. 12 is yet another schematic flowchart of a calibration method according to an embodiment of this application; and
FIG. 13 is a schematic diagram of another structure of a calibration apparatus according to an embodiment of this application.

**DESCRIPTION OF EMBODIMENTS**

The following describes the technical solutions in embodiments of this application with reference to the accompanying drawings in embodiments of this application. In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may represent: a, b, c, a and b, a and c, b and c, or a and b and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence. For example, "first" in a first preset condition and "second" in a second preset condition in embodiments of this application are merely used to distinguish between different preset conditions. Descriptions such as "first" and "second" in embodiments of this application are merely used for indicating and distinguishing between described objects, do not show a sequence, do not indicate a specific limitation on a quantity of devices in embodiments of this application, and cannot constitute any limitation on embodiments of this application.

It should be noted that, in this application, terms such as "an example" or "for example" are used to represent an example, an instance, or an illustration. Any embodiment or design scheme described as "an example" or "for example" in this application should not be construed as being more preferable or advantageous than other embodiments or design schemes. Exactly, the use of the term "an example", "for example", or the like is intended to present a related concept in a specific manner.

To resolve problems of high costs, poor effect, and low efficiency of manual calibration, embodiments of this application provide a calibration method. The method does not require participation of a calibration engineer, so that calibration efficiency can be improved and calibration costs can be reduced, and driving experience of a user can be improved by using a calibration parameter determined by using the calibration method in embodiments of this application is used.

The calibration method provided in embodiments of this application may be applicable to calibration of various controllers or systems in a vehicle, or may be applicable to calibration of another device other than a vehicle. A type of a specific device calibrated by using the calibration method is not limited in embodiments of this application. In the following embodiments, an example in which the calibration method is applied to vehicle calibration is used to describe the calibration method and apparatus provided in embodiments of this application. For example, the calibration method may be used for calibration for systems, such as an electronic stability control system (electronic stability control system, ESC), a vehicle state estimation (vehicle state estimation, VSE) system, an antilock brake system (antilock brake system, ABS), a traction control system (traction control system, TCS), a vehicle control unit (vehicle control unit, VCU) system, a thermal management system (thermal management system, TMS), an electric power steering (electric power steering, EPS) system and a value added function (value added function, VAF) system.

FIG. 2 shows a calibration method according to an embodiment of this application. As shown in FIG. 2, the method may include the following steps: Step 1: A calibration device delivers a calibration parameter to a controller. Step 2: A professional driver drives a vehicle to test and collect related data. Step 3: The professional driver drives the vehicle back to an initial position. Step 4: The calibration device performs data analysis by using an optimization algorithm based on collected data and provides a suggestion on adjusting the calibration parameter. To find an optimal calibration parameter more quickly and better, when delivering the calibration parameter to the controller for the first time, the calibration device may set an initial value for each calibration parameter based on experience of a calibration engineer, or may obtain an initial value of each calibration parameter from a cloud. Then, an initial calibration parameter is delivered to the controller. When subsequently delivering the calibration parameter to the controller, the calibration device may deliver a calibration parameter optimized by using the optimization algorithm to the controller.

The calibration device in FIG. 2 includes but is not limited to electronic devices, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device. The calibration device is configured to execute software code or a computer program to implement the calibration method provided in this embodiment of this application.

Compared with the manual calibration method shown in FIG. 1, the calibration method shown in FIG. 2 calibrates a vehicle by using the optimization algorithm via the calibration device, and may not require participation of the calibration engineer. This can reduce vehicle calibration costs and improve calibration efficiency.

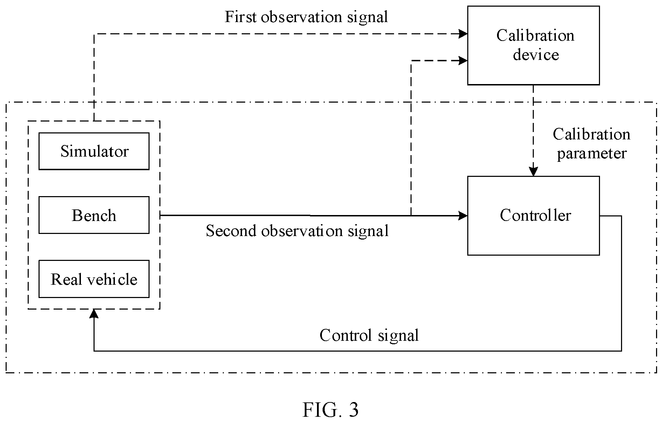

FIG. 3 is a schematic diagram of a structure of a calibration system according to an embodiment of this application. As shown in FIG. 3, the calibration system includes a calibration device and a vehicle, and the calibration device may be connected to a controller by using a calibration tool. The calibration device is configured to execute software code or a computer program to implement the calibration method provided in this embodiment of this application. The calibration device delivers a calibration parameter to the controller, and the controller delivers control information to a simulator/bench/real vehicle based on the calibration parameter. The calibration device updates the calibration parameter through continuous optimization and iteration by using an optimization algorithm based on responses (a first observation signal and a second observation signal) of the simulator/bench/real vehicle. Finally, an optimal combination of the calibration parameter is obtained. Compared with manual calibration, the calibration system shown in FIG. 3 does not require participation of a calibration engineer, and this can effectively reduce vehicle calibration costs and improve a calibration effect and calibration efficiency.

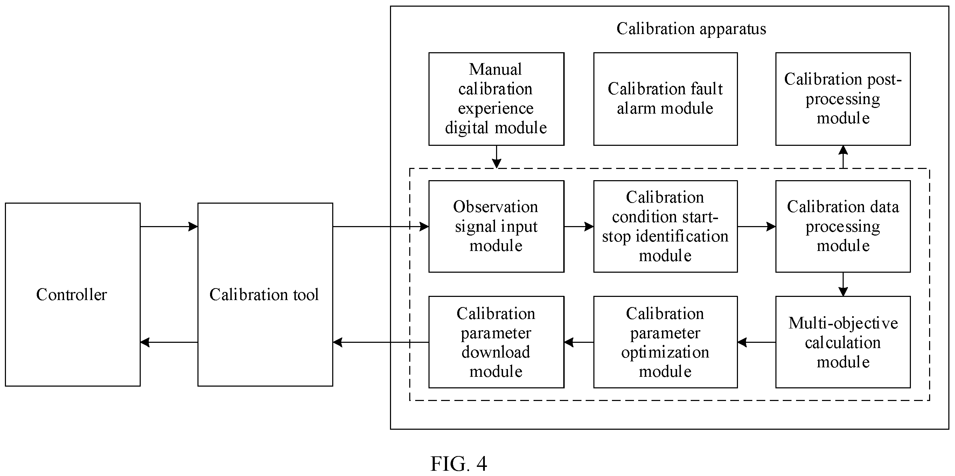

FIG. 4 is a calibration apparatus according to an embodiment of this application. As shown in FIG. 4, the calibration apparatus may be connected to a controller (for example, an electronic control unit, ECU) by using a calibration tool, or may be directly connected to a controller. The calibration apparatus includes a manual calibration experience digital module, an observation signal input module, a calibration condition start-stop identification module, a calibration data processing module, a multi-objective calculation module, a calibration parameter automatic optimization module, a calibration parameter download module, a calibration fault alarm module and a calibration post-processing module. The following describes specific functions of the nine modules.

As an input module of the calibration apparatus, the manual calibration experience digital module can digitally extract calibration experience of an expert and a calibration engineer by using a digital policy, and can also digitally extract an empirical value of a calibration parameter by using the digital policy, to guide an optimization algorithm or machine learning algorithm to find an optimal combination of calibration parameters more quickly and better. A specific digital policy is not limited in this embodiment of this application. An example in which the digital policy includes digitization of a proper range of the calibration parameter, digitization of a coupling relationship of the calibration parameter, and digitization of a constraint condition is used for description in the following embodiment.

The digitalization of the proper range of the calibration parameter refers to digitalization of an important calibration parameter and adjustment range accumulated by the calibration engineer based on experience to obtain a reasonable range of upper and lower limits of the calibration parameter. In a process of optimizing the calibration parameter, the calibration parameter can be optimized and solved based on the reasonable range of the upper and lower limits of the calibration parameter, so that calibration efficiency can be improved.

The digitization of the coupling relationship of the calibration parameter refers to obtaining a coupling relationship between a plurality of calibration parameters based on types of the calibration parameters. The types of the calibration parameters include a Table type, a Map type, and a scalar type.

In some examples, because there is a coupling relationship between Table-type calibration parameters, fitting may be performed on the Table-type calibration parameters by using a polynomial function (for example, $y = ax^2 + bx + c$) to obtain coupling factors $a$, $b$, and $c$. When the calibration parameter is optimized, optimization of the Table-type calibration parameter can be converted into optimization of the coupling factors $a$, $b$, and $c$. Therefore, a quantity of calibration parameters can be reduced, optimization time is reduced, and optimization efficiency is improved.

In some other examples, because there is a coupling relationship between Map-type calibration parameters, fitting may be performed on Map-type calibration parameters by using a polynomial function (for example, $z = x^2/2p + y^2/2q$) to obtain coupling factors $p$ and $q$. When the calibration parameter is optimized, optimization of the Table-type calibration parameters may be converted into optimization of the coupling factors $p$ and $q$. Therefore, a quantity of calibration parameters can be reduced, optimization time is reduced, and optimization efficiency is improved.

The digitization of the constraint condition means that at least one of a constraint condition of an observation signal, a constraint condition of a performance index, a constraint condition of an objective function value, or a constraint condition of a coupling factor between calibration parameters is digitized, to guide the optimization algorithm to find the optimal combination of calibration parameters more quickly and better.

Optionally, the empirical value of the calibration parameter, the range of the calibration parameter, the coupling relationship of the calibration parameter, the constraint condition, the objective function, the performance index, and the like that are obtained by using the manual calibration experience digital module may be stored in the calibration apparatus, or may be stored on a cloud.

The observation signal input module receives an observation signal from the controller by using the calibration tool. A specific type of the observation signal is related to a type of a to-be-calibrated system. The specific type of the observation signal is not limited in this embodiment of this application. The observation signal may be used by the calibration condition start-stop identification module to determine entry and exit of a calibration function, or may be used by the multi-objective calculation module to determine a value of the objective function.

The calibration condition start-stop identification module determines the entry and exit of the calibration function by using a status of a function flag and a value of a related observation signal. When the calibration condition start-stop identification module determines to enter the calibration function, the calibration data processing module performs data processing on an input observation signal. When the calibration condition start-stop identification module determines to exit the calibration function, the calibration data processing module does not perform data processing on the input observation signal. A specific condition for determining the entry and exit of the calibration function by the calibration condition start-stop identification module is not limited in this embodiment of this application.

The calibration data processing module performs validity judgment and data processing on the observation signal input by the observation signal input module, and processed data may be used by the multi-objective calculation module to calculate the objective function.

Optionally, the data processing may include but is not limited to data dimension reduction, data interception, and filtering processing. A specific manner of data processing is not limited in this embodiment of this application.

The multi-objective calculation module calculates, based on the processed observation signal output by the calibration data processing module, a plurality of performance indexes of a to-be-calibrated system, and calculates at least one objective function based on the plurality of performance indexes, where the objective function indicates a function relationship between performance indexes.

Optionally, there may be at least one objective function in this embodiment of this application, the at least one objective function includes a subjective-type objective function and an objective-type objective function, and the performance indexes may include an objective-type performance index and a subjective-feeling-type performance index. The subjective-type objective function is a weighted sum of a plurality of subjective-feeling-type performance indexes, and a sum of weighting coefficients of the plurality of subjective-feeling-type performance indexes is 1. The objective-type objective function is a weighted sum of a plurality of objective-type performance indexes, and a sum of weighting coefficients of the plurality of objective-type performance indexes is 1.

The calibration parameter optimization module obtains an updated calibration parameter by using the optimization algorithm or the machine learning algorithm based on the objective function value, an observation quantity constraint condition, and a calibration parameter coupling condition that are output by the multi-objective calculation module.

The calibration parameter download module writes, to the controller by invoking an application programming interface (application programming interface, API) of the calibration tool, the updated calibration parameter obtained by the calibration parameter optimization module.

The calibration fault alarm module is configured to identify and alarm for various faults that occur during the calibration process. When an exception occurs during automatic calibration of the calibration function, the module can be activated to generate a calibration fault alarm to remind calibration personnel to intervene.

The calibration post-processing module invokes related commands to disconnect a signal and calibration parameter interaction between automatic calibration software and the controller, exits a function automation calibration process, and automatically generates a calibration report based on test data of all test groups.

Optionally, content of the calibration report may include a performance evaluation index, objective function value distribution, an optimal calibration parameter value combination, and graphic display of an important observation signal.

According to the calibration apparatus provided in this embodiment of this application, when a system or a controller of a device such as a vehicle is calibrated by using the foregoing nine modules, no participation of a calibration engineer is required. Therefore, calibration efficiency can be improved, and calibration costs can be reduced. In addition, in a process of optimizing the calibration parameter, the calibration apparatus combines the subjective-type objective function and the coupling relationship between the calibration parameters. Therefore, the determined calibration parameter can not only improve driving experience of a user, but also reduce a quantity of calibration parameters, reduce optimization time, and improve optimization efficiency.

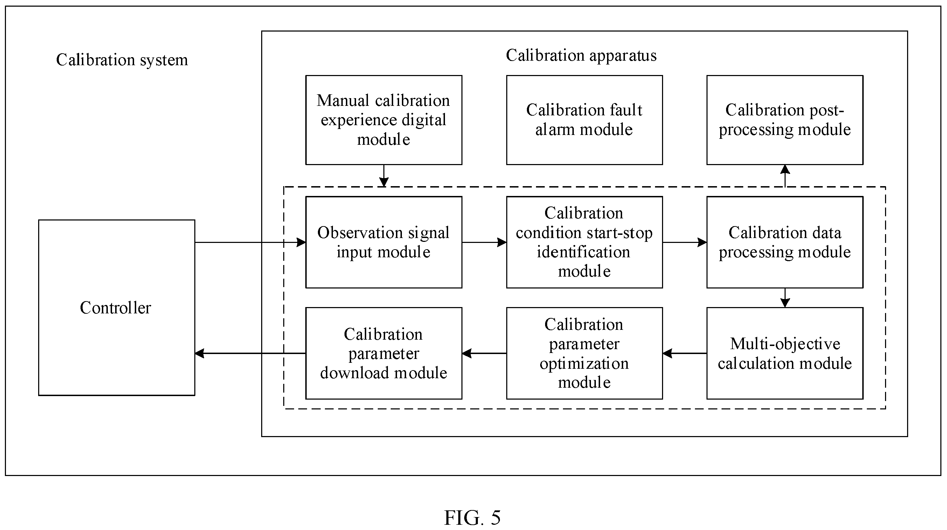

An embodiment of this application further provides a calibration system. As shown in FIG. 5, the calibration system includes the calibration apparatus in FIG. 4 and a controller. The controller is coupled to the calibration apparatus. The controller is configured to send an observation signal to the calibration apparatus and receive a calibration parameter from the calibration apparatus.

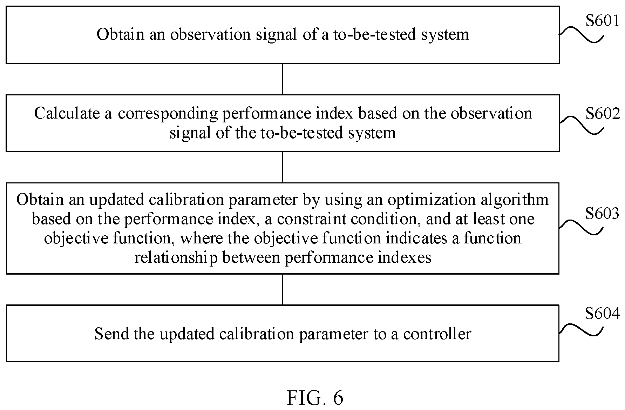

FIG. 6 shows a calibration method according to an embodiment of this application. The method may be performed by a calibration device. As shown in FIG. 6, the method includes the following steps S601 to S604.

S601: Obtain an observation signal of a to-be-tested system.

There may be one or more to-be-tested systems. The to-be-tested system is a system that needs to be calibrated. The to-be-tested system may be a system of a vehicle, or may be a system of another device. A specific type of the to-be-tested system and a specific device to which the to-be-tested system belongs are not limited in this embodiment of this application.

For example, taking a calibrated vehicle as an example, the to-be-tested system may be at least one of an electronic stability control ESC system, a vehicle state estimation VSE system, an antilock brake system ABS, a traction control system TCS, a vehicle control unit VCU system, a thermal management system TMS, an electric power steering EPS system, a value added function VAF system, and the like of the vehicle. In the following embodiment, an example in which the to-be-tested system is the TCS is used for description.

Optionally, the observation signal may be a signal detected by a sensor in the to-be-tested system. For example, the observation signal may be a signal that is detected by a sensor of a vehicle and that is related to vehicle running. The observation signal may include parameters such as a left front axle speed, a right front axle speed, a driving rotation speed peak, a driving rotation speed valley, and a yawing angular velocity. A specific type of the observation signal is not limited in this embodiment of this application. For different to-be-tested systems, observation signals may be the same or may be different.

In some examples, the foregoing step S601 may include receiving an observation signal from a vehicle controller. The observation signal in the vehicle controller may be a parameter collected by the sensor when the vehicle is running.

The parameter may be stored in the controller, and the observation signal is read from the controller when the vehicle is calibrated.

Because a calibration parameter is an important index affecting vehicle performance, when the calibration parameter is different, the obtained observation signal of the to-be-tested system changes accordingly. The obtained observation signal of the to-be-tested system in step S601 may be an observation signal that is of the to-be-tested system and that is detected by the sensor after the calibration device delivers an initial calibration parameter to the controller and the vehicle runs based on the initial calibration parameter. Alternatively, the obtained observation signal of the to-be-tested system in step S601 may be an observation signal detected by the sensor after the vehicle controller runs based on an updated calibration parameter obtained in step S603.

S602: Calculate a corresponding performance index based on the observation signal of the to-be-tested system.

The performance index can be used to evaluate performance of the to-be-tested system. There may be one or more performance indexes of the to-be-tested system.

The performance index of the to-be-tested system may include an objective-type performance index and a subjective-feeling-type performance index. The objective-type performance index is related to corporate internal standards, industry standards, international standards, customer performance index requirements and regulatory requirements. The subjective-feeling-type performance index is related to a driver's driving feeling.

The objective-type performance index may be represented by using a function relationship between a plurality of observation signals, and a specific value of the objective-type performance index may be obtained by substituting the observation signals into a preset performance index function. The subjective-feeling-type performance index can be obtained through scoring by a professional driver.

For example, the to-be-tested system is the TCS. The objective-type performance index of the to-be-tested system may include a front-axle speed performance index, a driving rotation speed fluctuation performance index, a yawing angular velocity performance index, a stable driving axle speed performance index, and the like. The subjective-feeling-type performance index of the to-be-tested system may include control jitter, acceleration performance, acceleration noise, driver handling performance, and the like.

For example, the front-axle speed performance index may be represented by using the following function:

$$\mathrm{vWhlobj} = \mathrm{sum}((\mathrm{vWhlFL} + \mathrm{vWhlFR})/2 - \mathrm{vTarKarAxlFA}).$$

Herein, vWhlobj is the front-axle speed performance index, vWhlFL is the left front axle speed, vWhlFR is the right front axle speed, vTarKarAxlFA is a target axle speed, and the target axle speed is a preset value. A value of the front-axle speed performance index may be obtained based on the left front axle speed and right front axle speed of the observation signal obtained in step S601 and in combination with a front-axle speed performance index function.

For another example, the driving rotation speed fluctuation performance index may be represented by using the following function:

$$\Delta\mathrm{nDriveobj} = \mathrm{sum}(\mathrm{nDrivepeak}[i] - \mathrm{nDrive\ valley}[i]).$$

Herein, $\Delta$nDriveobj is the driving rotation speed fluctuation performance index, nDrivepeak[i] is the driving rotation speed peak, and nDrive valley[i] is the driving rotation speed valley. A value of the driving rotation speed fluctuation performance index may be obtained based on the driving rotation speed peak and the driving rotation speed valley of the observation signal obtained in step S601 and in combination with a driving rotation speed fluctuation performance index function.

For another example, the yawing angular velocity performance index may be represented by using the following function:

$$\mathrm{YawRateobj} = \mathrm{sum}(\mathrm{abs}(\mathrm{YawRate})).$$

Herein, YawRateobj is the yawing angular velocity performance index, and YawRate is the yawing angular velocity. A value of the yawing angular velocity performance index may be obtained based on the yawing angular velocity of the observation signal obtained in step S601 and in combination with a yawing angular velocity performance index function.

For another example, the stable driving axle speed performance index may be expressed by using the following function:

$$vAxlWhlobj = sum(0.85 * Vxref + 4 - (vWhlFL + vWhlFR)/2).$$

Herein, vAxlWhlobj is the stable driving axle speed performance index, Vxref is a reference axle speed, the reference axle speed is a preset value, vWhlFL is the left front axle speed, and vWhlFR is the right front axle speed. A value of the stable driving axle speed performance index may be obtained based on the left front-axle speed and right front-axle speed of the observation signal obtained in step S601 and in combination with a stable driving axle speed performance index function.

S603: Obtain the updated calibration parameter by using an optimization algorithm based on the performance index, a constraint condition, and at least one objective function, where the objective function indicates a function relationship between performance indexes.

Optionally, a latest performance index, a latest constraint condition, and the objective function may be obtained from a cloud.

A function of the to-be-tested system may be evaluated by using the at least one objective function. The at least one objective function may include an objective-type objective function and a subjective-type objective function. The objective-type objective function can be a weighted sum of a plurality of objective-type performance indexes, and a sum of weighting coefficients of the plurality of objective-type performance indexes is 1. The subjective-type objective function can be a weighted sum of a plurality of subjective-feeling-type performance indexes, and a sum of weighting coefficients of the plurality of subjective-feeling-type performance indexes is 1.

For example, the to-be-tested system is the TCS, and the to-be-tested system includes four objective-type performance indexes, which are respectively the front-axle speed performance index, the driving rotation speed fluctuation performance index, the yawing angular velocity performance index, and the stable driving axle speed performance index. The objective-type objective function of the to-be-tested system may be the following formula:

$$f\ objective = c1 * vWhlobj + c2 * \Delta nDriveobj + c3 * YawRateobj + c4 * vAxlWhlobj,$$

where
c1, c2, c3, and c4 are weighting coefficients, and c1 + c2 + c3 + c4 = 1.

For another example, the to-be-tested system is the TCS, and the to-be-tested system includes four subjective-feeling-type performance indexes, which are respectively a control jitter score, an acceleration performance score, an acceleration noise score, and a driver handling score. The subjective-feeling-type objective function of the to-be-tested system may be the following formula:

f subjective = d1 * score control jitter + d2 * score acceleration performance + d3 * score acceleration noise + d4 * score driver handling, where
score control jitter is the control jitter score, score acceleration performance is the acceleration performance score, score acceleration noise is the acceleration noise score, score driver handling is the driver handling score, d1, d2, d3, and d4 are weighting coefficients, and d1 + d2 + d3 + d4 = 1.

The constraint condition is a condition that needs to be met during calibration. The constraint condition may be a constraint condition obtained by performing digital processing on the industry standards, the international standards, and the regulatory standards, or may be a constraint condition obtained by performing digital processing on an adjustment range of a calibration parameter accumulated by an engineer based on experience. The constraint condition may be represented by upper and lower thresholds.

In some examples, the constraint condition may include at least one of a constraint condition of the observation signal, a constraint condition of the performance index, a constraint condition of an objective function value, or a constraint condition of the coupling factor between the calibration parameters. For example, the to-be-tested system is the TCS. The constraint condition of the observation signal may be a constraint condition that is obtained by performing digital processing on a yawing angular velocity constraint, a steering wheel angle constraint, and a slip rate constraint in a regulation standard.

For example, the optimization algorithm may include a Bayesian optimization algorithm, a particle swarm optimization algorithm, a genetic algorithm, or a machine learning algorithm.

For example, the to-be-tested system is the TCS and the optimization algorithm is the Bayesian optimization algorithm. The foregoing step S603 may include: calculating an objective-type objective function and a subjective-type objective function that correspond to the TCS, and by invoking the Bayesian optimization algorithm, and based on values of a current objective-type objective function and a current subjective-type objective function, a constraint condition of the objective function, and a constraint condition of the calibration parameter, solving an optimization problem, and generating an optimized calibration parameter (that is, the updated calibration parameter). The optimized calibration parameter can be used for a next round of test.

Optionally, a calibration parameter of a same device in different countries or regions may be the same or may be different. This is not limited in this embodiment of this application.

For example, vehicle calibration is used as an example. When a vehicle is used in different countries, different parameters may be calibrated for the vehicle because standards and road styles of different countries are different. In a process of calibrating the vehicle, an initial value of the calibration parameter, the constraint condition, and a weighting coefficient of the objective function may be adjusted accordingly, so that a determined calibration parameter is more suitable for the vehicle, and performance of the vehicle can be better brought into play.

For example, when the vehicle is used in Germany, the vehicle may be calibrated by using a performance index, a constraint condition, at least one objective function, and a weighting coefficient of the at least one objective function that are in a German standard. When the vehicle is used in China, the vehicle may be calibrated by using a performance index, a constraint condition, at least one objective function, and a weighting coefficient of the at least one objective function that are in a Chinese standard.

According to the calibration method provided in this application, an optimization problem is solved by using the optimization algorithm or the machine learning algorithm, so that an optimal calibration parameter can be quickly and accurately obtained, calibration efficiency can be improved, and calibration costs can be reduced.

S604: Send the updated calibration parameter to the controller.

Optionally, before a device is calibrated, an initial value of the latest calibration parameter may be obtained from the cloud, and the initial value of the latest calibration parameter is sent to the controller.

The controller receives the updated calibration parameter. Because the calibration parameter affects vehicle performance, when the updated calibration parameter is obtained, the vehicle may run again based on the updated calibration parameter, to further obtain an observation signal of the to-be-tested system corresponding to the updated calibration parameter. A corresponding performance index and an objective function are calculated based on the observation signal, a calibration parameter that is updated again by using the optimization algorithm is obtained, and the calibration parameter that is updated again is delivered to the controller. The vehicle may run again based on the calibration parameter that is updated again. The calibration device continuously repeats the foregoing steps S601 to S604 until a difference between a value of the at least one objective function and a value of a preset objective function is the smallest, and when the constraint condition is met, a calibration parameter at this time is determined as the optimal calibration parameter.

According to the calibration method provided in this embodiment of this application, calibration does not require participation of a calibration engineer. Therefore, calibration efficiency can be improved, and calibration costs can be reduced. In addition, a calibration apparatus combines the subjective-type objective function in a process of optimizing the calibration parameter. Therefore, the determined calibration parameter can improve driving experience of a user.

Optionally, the updated calibration parameter is sent to a controller of a to-be-calibrated device. After the to-be-calibrated device restarts, the to-be-calibrated device runs by using the updated calibration parameter, and then performs a new round of calibration.

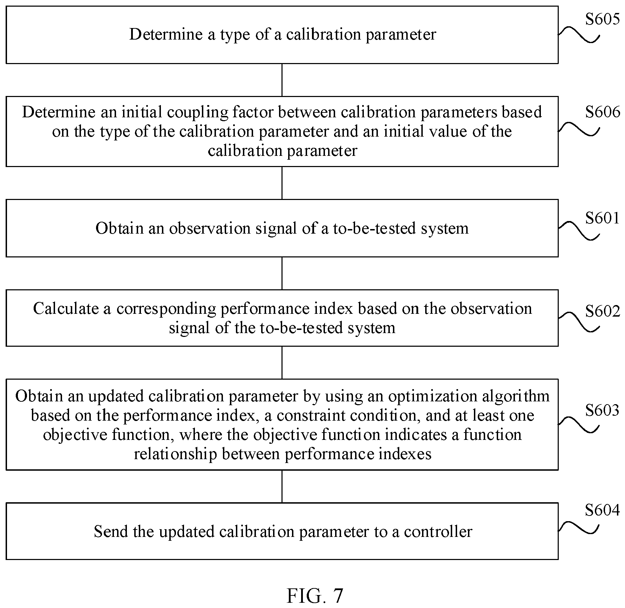

An embodiment of this application further provides a calibration method. As shown in FIG. 7, before step S601, steps S605 and S606 may be further included.

S605: Determine a type of a calibration parameter, and the type of the calibration parameter includes a Map type and a Table type. The type of the calibration parameter may be preset, and the preset type may be determined based on experience of a calibration engineer. When the type of the calibration parameter is the Map type or the Table type, there is a coupling relationship between a plurality of calibration parameters. Map type Table type.

Optionally, the type of the calibration parameter may further include a scalar type, a calibration parameter of the scalar type is an independent calibration parameter, and the calibration parameter of the scalar type has no coupling relationship.

S606: Determine an initial coupling factor between calibration parameters based on the type of the calibration parameter and an initial value of the calibration parameter.

A quantity of the initial coupling factors is less than a quantity of the calibration parameters.

The initial value of the calibration parameter may be a value determined based on the experience of the calibration engineer. When the type of the calibration parameter is the Map type or the Table type, there is the coupling relationship between the plurality of calibration parameters. Because there are a large quantity of calibration parameters, if the calibration parameter is directly optimized by using the optimization algorithm in step S603, optimization time becomes long, and optimization efficiency cannot be greatly improved. Therefore, the calibration parameter of the Map type or the Table type may be fitted in a polynomial function manner, to obtain a coupling factor. In step S603, when the optimization algorithm is used for optimization, an optimization coupling factor may be used instead of directly optimizing the calibration parameter. Because a quantity of coupling factors is much smaller than the quantity of calibration parameters, compared with direct optimization of the calibration parameter, the optimization coupling factor can greatly reduce the quantity of calibration parameters, reduce optimization time, and improve optimization efficiency.

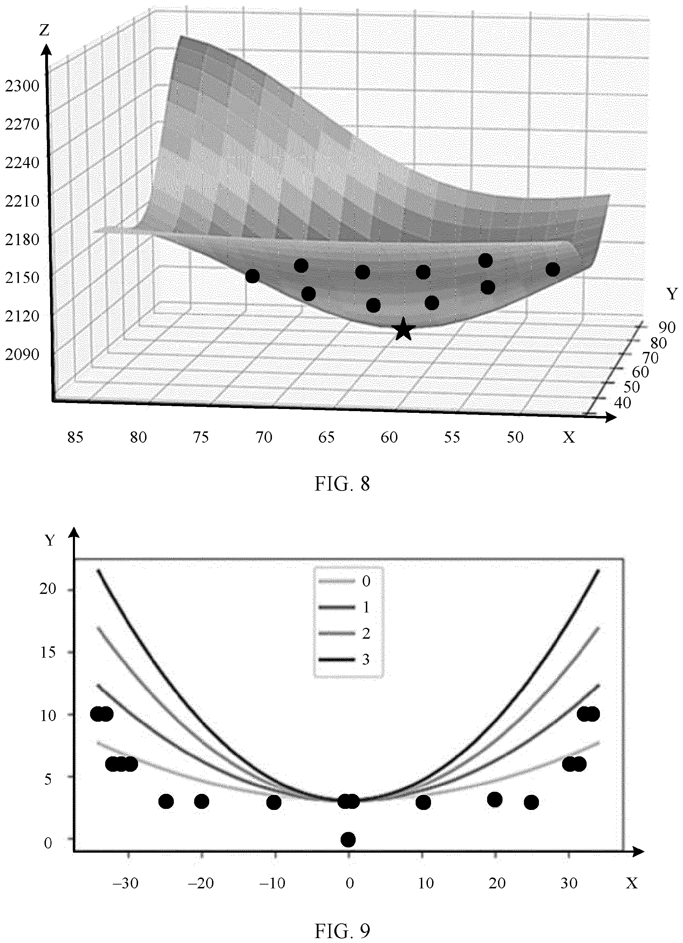

For example, as shown in FIG. 8, an initial value may be set for each Map-type calibration parameter based on experience of a calibration engineer, and corresponding input data x and y, and output data z may be obtained based on the initial value of the calibration parameter. A point corresponding to each calibration parameter is marked in a three-dimensional coordinate system shown in FIG. 8, and these discrete points may be fitted by using a polynomial function. For example, fitting is performed by using a polynomial function $z = x^2/2p + y^2/2q$, to obtain initial coupling factors p and q, and then the coupling factors p and q are optimized by using the optimization algorithm with reference to the foregoing step S603. This can effectively reduce a quantity of calibration parameters that are needed, and improve calibration efficiency. Which polynomial to be used to fit the Map-type calibration parameter is not limited in this embodiment of this application.

For example, 40 Table-type calibration parameters need to be calibrated for vehicle calibration. An initial value may be set for each Map-type calibration parameter based on the experience of the calibration engineer, and corresponding input data x and y, and output data z may be obtained based on the initial value of the calibration parameter. A point corresponding to each calibration parameter is marked in a three-dimensional coordinate system shown in FIG. 8, and these discrete points may be fitted by using a polynomial function. For example, fitting is performed by using a polynomial function $z = x^2/2p + y^2/2q$ to obtain the initial coupling factors p and q, and then the two coupling factors p and q are optimized by using the optimization algorithm with reference to the foregoing step S603 instead of the foregoing 40 Map-type calibration parameters. By calculating a coupling relationship between the 40 Map-type calibration parameters, a quantity of calibration parameters that need to be optimized can be reduced from 40 to 2. This can effectively reduce a quantity of parameters that need to be calibrated and improve calibration efficiency.

For example, as shown in FIG. 9, an initial value may be set for each Table-type calibration parameter based on experience of a calibration engineer, and corresponding input data x and output data y may be obtained based on the initial value of the calibration parameter. A point corresponding to each calibration parameter is marked in a two-dimensional coordinate system shown in FIG. 9, and these discrete points may be fitted by using a polynomial function. For example, fitting is performed by using a polynomial function $y = ax^2 + bx + c$, to obtain initial coupling factors a, b and c, and then the coupling factors a, b and c are optimized by using the optimization algorithm with reference to the foregoing step S603. This can effectively reduce a quantity of calibration parameters that are needed, and improve calibration efficiency. Which polynomial to be used to fit the Table-type calibration parameter is not limited in this embodiment of this application.

For example, 20 Table-type calibration parameters need to be calibrated for vehicle calibration. An initial value may be set for each Table-type calibration parameter based on the experience of the calibration engineer, and corresponding input data x and output data y may be obtained based on the initial value of the calibration parameter. A point corresponding to each calibration parameter is marked in a two-dimensional coordinate system shown in FIG. 9, and these discrete points may be fitted by using a polynomial function. For example, fitting is performed by using a polynomial function $y = ax^2 + bx + c$ to obtain the initial coupling factors a, b and c, and then the three coupling factors a, b and c are optimized by using the optimization algorithm with reference to the foregoing step S603 instead of the foregoing 20 Table-type calibration parameters. By calculating a coupling relationship between the 20 Table-type calibration parameters, a quantity of calibration parameters that need to be optimized can be reduced from 20 to 3. This can effectively reduce a quantity of parameters that need to be calibrated and improve calibration efficiency.

Correspondingly, step S603 includes: obtaining an updated coupling factor by using the optimization algorithm based on a performance index, a constraint condition, at least one objective function, and a coupling factor used before updating. The coupling factor used before updating includes an initial coupling factor.

For example, when step S603 is performed for the first time to perform optimization, the coupling factor used before updating may be the initial coupling factor in step S606. Based on the performance index, the constraint condition, and a value of the at least one objective function, the initial coupling factor may be updated by using the optimization algorithm, to obtain the updated coupling factor. The updated coupling factor is an updated calibration parameter. In other words, compared with directly optimizing the calibration parameter, in this solution, the quantity of parameters that need to be calibrated can be reduced by optimizing the coupling factor.

For example, when step S603 is performed for the second time or after the second time to perform optimization, the coupling factor used before updating is a coupling factor determined in a previous optimization. For example, when step S603 is performed for the second time to perform optimization, the coupling factor used before updating is a coupling factor determined during the first optimization. For another example, when step S603 is performed for the third time to perform optimization, the coupling factor used before updating is a coupling factor determined during the second optimization.

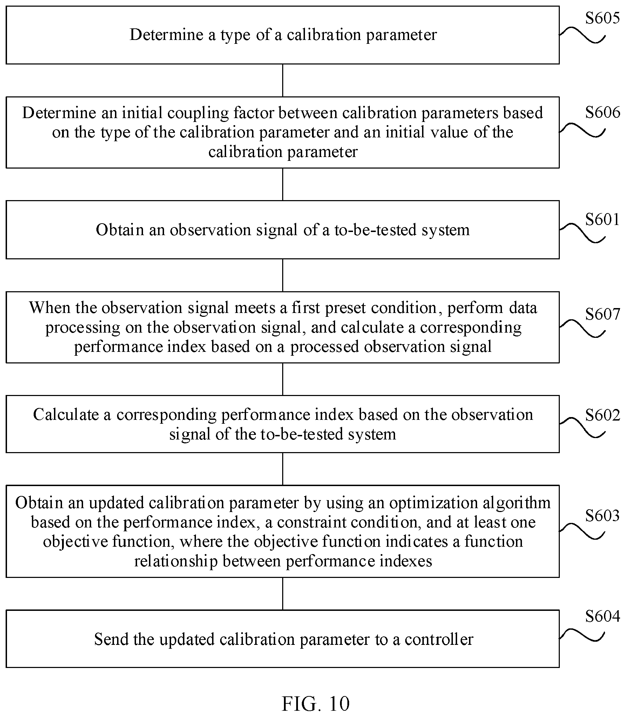

An embodiment of this application further provides a calibration method. As shown in FIG. 10, after step S601 and before step S602, step S607 may be further included.

S607: When the observation signal meets a first preset condition, perform data processing on the observation signal, and calculate a corresponding performance index based on a processed observation signal.

The observation signal that meets the first preset condition and the observation signal used for calculation in step S602 may be a same observation signal, or may be different observation signals. In other words, the same observation signal may be used to determine whether to perform data processing, or may be used as a data processing object. This is not limited in this embodiment of this application.

Optionally, the first preset condition may be a specified range associated with the observation signal. When the observation signal is within the specified range, the observation signal is processed, and when the observation signal is not within the specified range, the observation signal is not processed.

Optionally, the first preset condition may alternatively be a specified value associated with the observation signal. When the observation signal is greater than or equal to the specified value, the observation signal is processed, and when the observation signal is less than the specified value, the observation signal is not processed. Specific content and a form of the first preset condition are not limited in this embodiment of this application. An example in which the first preset condition is that a preset left front-axle speed is K is used for example description in the following embodiment.

For example, the first preset condition is that a left front-axle speed is greater than or equal to the preset left front-axle speed K. In a process in which a professional driver presses a throttle to the bottom, the left front-axle speed continuously increases. In a process in which the professional driver releases the throttle, the left front-axle speed continuously decreases. When the left front-axle speed is greater than or equal to the preset left front-axle speed K, data processing is performed on the observation signal, and when the left front-axle speed is less than the preset left front-axle speed K, data processing is not performed on the observation signal.

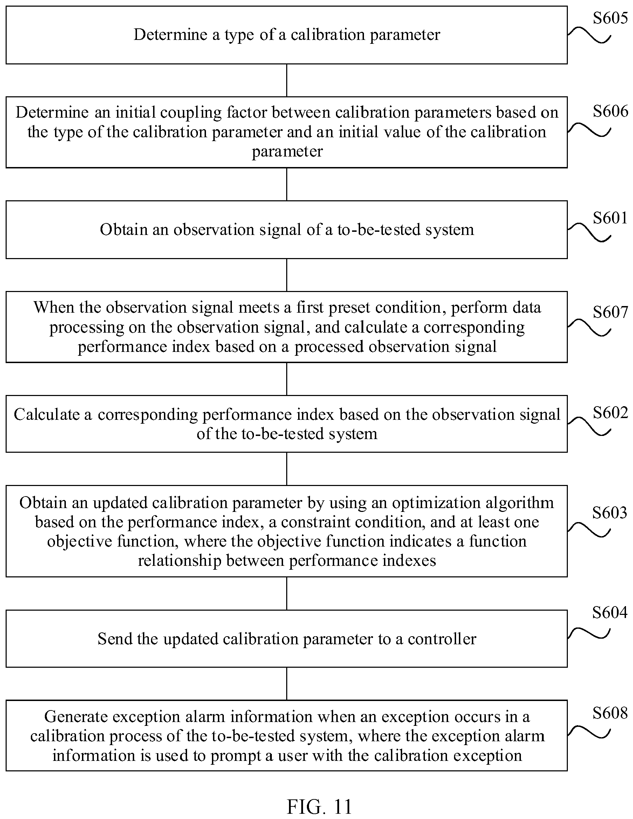

An embodiment of this application further provides a calibration method. As shown in FIG. 11, in addition to the foregoing steps S601 to S607, step S608 may be further included.

S608: Generate exception alarm information when an exception occurs in a calibration process of the to-be-tested system, where the exception alarm information is used to prompt a user with the calibration exception.

For example, when a calibration tool fails to be connected or calibration software fails to be initialized, corresponding exception alarm information may be generated, to prompt the user in time that the calibration exception needs to be processed. Therefore, waiting time of the user can be reduced because the user does not know the alarm, and optimization efficiency can be improved.

An execution sequence of step S608 and steps S601 to S607 is not limited in this embodiment of this application. An exception alarm may occur when any one of steps S601 to S607 is performed. FIG. 11 is an example in which step S608 is performed after step S604.

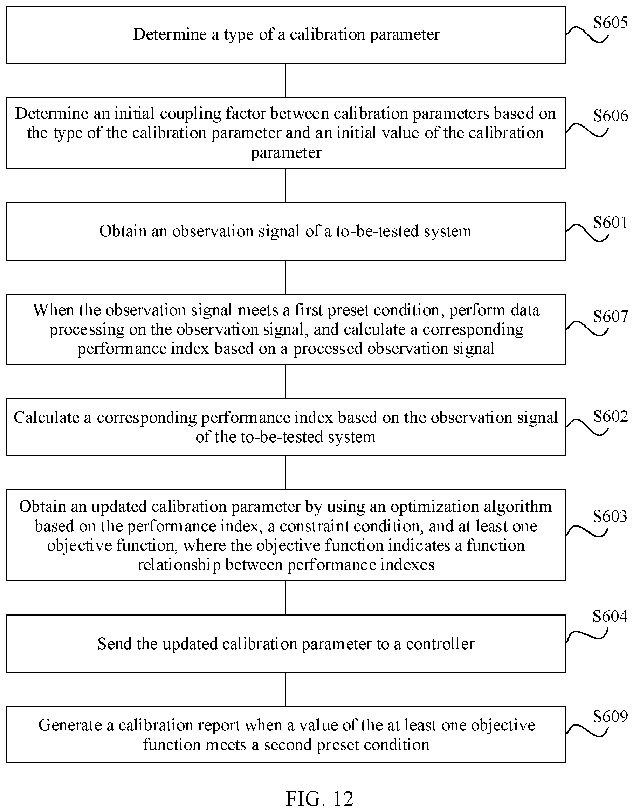

An embodiment of this application further provides a calibration method. As shown in FIG. 12, after steps S601 to S607, step S609 may be further included.

S609: Generate a calibration report when a value of the at least one objective function meets a second preset condition.

The calibration report can be generated by various data processing in an optimization process. Content of the calibration report can include a performance evaluation index, objective function value distribution, an optimal calibration parameter group, and important observation graph display.

Optionally, the second preset condition may be a range of a preset objective function value. When the value of the at least one objective function falls within the range of the preset objective function value, the calibration report is generated. Specific content and a form of the second preset condition are not limited in this embodiment of this application. In the following embodiment, an example in which the second preset condition is the preset objective function value is used for description.

For example, a TCS function is used as an example. A preset objective-type objective function value is M, and a preset subjective-type objective function value is N. When the objective-type objective function value is equal to M and the subjective-type objective function value is equal to N, the calibration report is generated.

At any stage of a calibration start or a calibration end, prompt information may be sent to a controller. The prompt information is used to prompt the user with at least one of a calibration start or a calibration end.

Optionally, the prompt information is sent to a controller of a to-be-calibrated device. The to-be-calibrated device may give a prompt to the user. The prompt may include sound, light, and vibration. A specific type of prompt provided by the to-be-calibrated device to the user is not limited in this embodiment of this application.

For example, when calibration starts, the calibration device may send the prompt information to the controller of the to-be-calibrated device, and the to-be-calibrated device may give a prompt sound of "calibration starts" to the user based on the prompt information. When calibration ends, the calibration device may send the prompt information to the controller of the to-be-calibrated device, and the to-be-calibrated device may give a prompt sound of "calibration ends" to the user based on the prompt information.

According to the calibration method provided in this embodiment of this application, an optimization problem is solved by using the optimization algorithm or the machine learning algorithm, to quickly and accurately obtain an optimal calibration parameter. The method may be compatible with various devices or systems, and calibration may be performed without participation of a calibration engineer. This can improve calibration efficiency, and reduce calibration costs. In addition, the method combines the subjective-type objective function in a process of optimizing the calibration parameter. Therefore, the determined calibration parameter can improve driving experience of the user.

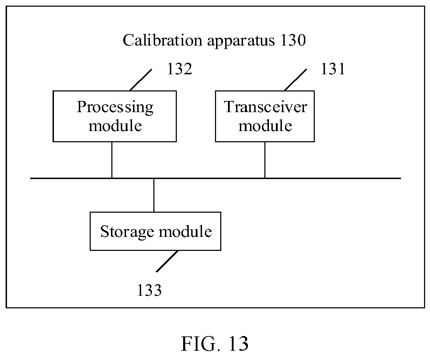

As shown in FIG. 13, an embodiment of this application further provides a calibration apparatus 130. The calibration apparatus 130 may include a transceiver module 131 and a processing module 132. Optionally, the calibration apparatus 130 may further include a storage module 133. The storage module 133 may store computer program code used to implement the calibration method shown in FIG. 6, FIG. 7, FIG. 10, FIG. 11, or FIG. 12.

The transceiver module 131 is configured to obtain an observation signal of a to-be-tested system.

The processing module 132 is configured to calculate a corresponding performance index based on the observation signal of the to-be-tested system.

The processing module 132 is further configured to obtain an updated calibration parameter by using an optimization algorithm based on the performance index, a constraint condition, and at least one objective function. The objective function indicates a function relationship between performance indexes.

Optionally, the constraint condition includes at least one of a constraint condition of the observation signal, a constraint condition of the performance index, a constraint condition of an objective function value, or a constraint condition of a coupling factor between the calibration parameters.

Optionally, the performance index includes an objective-type performance index and a subjective-feeling-type performance index, the at least one objective function includes at least one of an objective-type objective function or a subjective-type objective function, the objective-type objective function is a weighted sum of a plurality of objective-type performance indexes, and a sum of weighting coefficients of the plurality of objective-type performance indexes is 1. The subjective-type objective function is a weighted sum of a plurality of subjective-feeling-type performance indexes, and a sum of weighting coefficients of the plurality of subjective-feeling-type performance indexes is 1.

The processing module 132 is further configured to determine a type of the calibration parameter, where the type of the calibration parameter includes a Map type and a Table type.

The processing module 132 is further configured to determine an initial coupling factor between the calibration parameters based on the type of the calibration parameter and an initial value of the calibration parameter. A quantity of initial coupling factors is less than a quantity of the calibration parameters.

The processing module 132 is specifically configured to obtain an updated coupling factor by using the optimization algorithm based on the performance index, the constraint condition, the at least one objective function, and a coupling factor used before updating. The coupling factor used before updating includes the initial coupling factor.

The transceiver module 131 is further configured to send the updated calibration parameter to a controller.

The processing module 132 is specifically configured to: when the observation signal meets a first preset condition, perform data processing on the observation signal, and calculate a corresponding performance index based on a processed observation signal.

The processing module 132 is further configured to generate exception alarm information when an exception occurs in a calibration process of the to-be-tested system, where the exception alarm information is used to prompt a user with the calibration exception.

The processing module 132 is further configured to generate a calibration report when a value of the at least one objective function meets a second preset condition. The calibration report includes at least one of the performance index, objective function value distribution, an optimal calibration parameter, or an important observation pattern.

Optionally, the optimization algorithm includes a Bayesian optimization algorithm, a particle swarm optimization algorithm, a genetic algorithm, or a machine learning algorithm.

The transceiver module 131 is further configured to send prompt information to the controller, where the prompt information is used to prompt the user with at least one of a calibration start or a calibration end.

According to the calibration device provided in this embodiment of this application, an optimization problem is solved by using the optimization algorithm or the machine learning algorithm, to quickly and accurately obtain an optimal calibration parameter. The method may be compatible with various devices or systems, and calibration may be performed without participation of a calibration engineer. This can improve calibration efficiency, and reduce calibration costs. In addition, the method combines the subjective-type objective function in a process of optimizing the calibration parameter. Therefore, the determined calibration parameter can improve driving experience of a user.

An embodiment of this application further provides a calibration device. The calibration device includes a memory and a processor. The memory is coupled to the processor. The memory is configured to store computer program code, and the computer program code includes computer instructions. When the processor executes the computer instructions, the calibration device performs the calibration method shown in FIG. 6, FIG. 7, FIG. 10, FIG. 11, or FIG. 12.

An embodiment of this application further provides a computer-readable storage medium. The computer-readable storage medium stores computer program code. When the processor executes the computer program code, an electronic device performs the calibration method shown in FIG. 6, FIG. 7, FIG. 10, FIG. 11, or FIG. 12.

An embodiment of this application further provides a computer program product. When the computer program product is run on a computer, the computer performs the calibration method shown in FIG. 6, FIG. 7, FIG. 10, FIG. 11, or FIG. 12.

An embodiment of this application further provides a vehicle. The vehicle includes a controller and the calibration apparatus shown in FIG. 13. The controller is coupled to the calibration apparatus. Optionally, the vehicle may be a green car, an intelligent vehicle, or the like.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be in an ASIC. In addition, the ASIC may be in a core network interface device. Certainly, the processor and the storage medium may also exist in the core network interface device as discrete components.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effect of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

**Claims**

1. A calibration method, wherein the method comprises:

   obtaining an observation signal of a to-be-tested system;
   calculating a corresponding performance index based on the observation signal of the to-be-tested system;
   obtaining an updated calibration parameter by using an optimization algorithm based on the performance index, a constraint condition, and at least one objective function, wherein the objective function indicates a function relationship between performance indexes; and
   sending the updated calibration parameter to a controller.

2. The method according to claim 1, wherein the performance index comprises an objective-type performance index and a subjective-feeling-type performance index, the at least one objective function comprises at least one of an objective-type objective function or a subjective-type objective function, the objective-type objective function is a weighted sum of a plurality of objective-type performance indexes, a sum of weighting coefficients of the plurality of objective-type performance indexes is 1, the subjective-type objective function is a weighted sum of a plurality of subjective-feeling-type performance indexes, and a sum of weighting coefficients of the plurality of subjective-feeling-type performance indexes is 1.

3. The method according to claim 1 or 2, wherein the method further comprises:

   determining a type of the calibration parameter, wherein the type of the calibration parameter comprises a Map type and a Table type; and
   determining an initial coupling factor between calibration parameters based on the type of the calibration parameter and an initial value of the calibration parameter.

4. The method according to claim 3, wherein a quantity of initial coupling factors is less than a quantity of calibration parameters.

5. The method according to any one of claims 1 to 4, wherein the obtaining an updated calibration parameter by using an optimization algorithm based on the performance index, a constraint condition, and at least one objective function comprises:

obtaining an updated coupling factor by using the optimization algorithm based on the performance index, the constraint condition, the at least one objective function, and a coupling factor used before updating, wherein the coupling factor used before updating comprises the initial coupling factor.

6. The method according to any one of claims 1 to 5, wherein the calculating a corresponding performance index based on the observation signal of the to-be-tested system comprises:

when the observation signal meets a first preset condition, performing data processing on the observation signal, and calculating the corresponding performance index based on a processed observation signal.

7. The method according to any one of claims 1 to 6, wherein the method further comprises:

generating exception alarm information when an exception occurs in a calibration process of the to-be-tested system, wherein the exception alarm information is used to prompt a user with the calibration exception.

8. The method according to any one of claims 1 to 7, wherein the method further comprises:

generating a calibration report when a value of the at least one objective function meets a second preset condition, wherein the calibration report comprises at least one of the performance index, objective function value distribution, an optimal calibration parameter, or an important observation pattern.

9. The method according to any one of claims 1 to 8, wherein the optimization algorithm comprises at least one of the following: a Bayesian optimization algorithm, a particle swarm optimization algorithm, a genetic algorithm, and a machine learning algorithm.

10. The method according to any one of claims 1 to 9, wherein the constraint condition comprises at least one of a constraint condition of the observation signal, a constraint condition of the performance index, a constraint condition of an objective function value, or a constraint condition of the coupling factor between the calibration parameters.

11. The method according to any one of claims 1 to 10, wherein the method further comprises:

sending prompt information to the controller, wherein the prompt information is used to prompt the user with at least one of a calibration start or a calibration end.

12. A calibration apparatus, wherein the apparatus comprises a transceiver module and a processing module, wherein

the transceiver module is configured to obtain an observation signal of a to-be-tested system;
the processing module is configured to calculate a corresponding performance index based on the observation signal of the to-be-tested system;
the processing module is further configured to obtain an updated calibration parameter by using an optimization algorithm based on the performance index, a constraint condition, and at least one objective function, wherein the objective function indicates a function relationship between performance indexes; and
the transceiver module is further configured to send the updated calibration parameter to a controller.

13. The calibration apparatus according to claim 12, wherein the performance index comprises an objective-type performance index and a subjective-feeling-type performance index, the at least one objective function comprises at least one of an objective-type objective function or a subjective-type objective function, the objective-type objective function is a weighted sum of a plurality of objective-type performance indexes, a sum of weighting coefficients of the plurality of objective-type performance indexes is 1, the subjective-type objective function is a weighted sum of a plurality of subjective-feeling-type performance indexes, and a sum of weighting coefficients of the plurality of subjective-feeling-type performance indexes is 1.

14. The calibration apparatus according to claim 12 or 13, wherein the processing module is further configured to:

determine a type of the calibration parameter, wherein the type of the calibration parameter comprises a Map type and a Table type; and
determine an initial coupling factor between calibration parameters based on the type of the calibration parameter and an initial value of the calibration parameter.

15. The calibration apparatus according to claim 14, wherein a quantity of initial coupling factors is less than a quantity of calibration parameters.

16. The calibration apparatus according to any one of claims 12 to 15, wherein the processing module is specifically configured to obtain an updated coupling factor by using the optimization algorithm based on the performance index, the constraint condition, the at least one objective function, and a coupling factor used before updating, wherein the coupling factor used before updating comprises the initial coupling factor.

17. The calibration apparatus according to any one of claims 12 to 16, wherein the processing module is specifically configured to: when the observation signal meets a first preset condition, perform data processing on the observation signal, and calculate the corresponding performance index based on a processed observation signal.

18. The calibration apparatus according to any one of claims 12 to 17, wherein the processing module is further configured to generate exception alarm information when an exception occurs in a calibration process of the to-be-tested system, wherein the exception alarm information is used to prompt a user with the calibration exception.

19. The calibration apparatus according to any one of claims 12 to 18, wherein the processing module is further configured to generate a calibration report when a value of the at least one objective function meets a second preset condition, wherein the calibration report comprises at least one of the performance index, objective function value distribution, an optimal calibration parameter, or an important observation pattern.

20. The calibration apparatus according to any one of claims 12 to 19, wherein the optimization algorithm comprises at least one of the following: a Bayesian optimization algorithm, a particle swarm optimization algorithm, a genetic algorithm, and a machine learning algorithm.

21. The calibration apparatus according to any one of claims 12 to 20, wherein the constraint condition comprises at least one of a constraint condition of the observation signal, a constraint condition of the performance index, a constraint condition of an objective function value, or a constraint condition of the coupling factor between the calibration parameters.

22. The calibration apparatus according to any one of claims 12 to 21, wherein the transceiver module is further configured to send prompt information to the controller, wherein the prompt information is used to prompt the user with at least one of a calibration start or a calibration end.

23. A calibration device, wherein the calibration device comprises a memory and a processor, the memory is coupled to the processor, the memory is configured to store computer program code, the computer program code comprises computer instructions, and when the processor executes the computer instructions, the calibration device performs the calibration method according to any one of claims 1 to 11.

24. A computer-readable storage medium, wherein the computer-readable storage medium stores a computer program, and when the computer program is run on a calibration device, the calibration device is enabled to perform the calibration method according to any one of claims 1 to 11.

25. A calibration system, wherein the calibration system comprises a controller and the calibration apparatus according to any one of claims 12 to 22, and the controller is coupled to the calibration apparatus.

Professional     Calibration
driver           engineer

2        1

4

3

FIG. 1

Professional  Calibration  Calibration
driver        device       engineer

2        1

4

3

FIG. 2

First observation signal

Calibration
device

Calibration
parameter

Simulator

Bench

Second observation signal

Controller

Real vehicle

Control signal

FIG. 3

EP 4 425 110 A1

Calibration apparatus

| Manual calibration experience digital module | Calibration fault alarm module | Calibration post-processing module |

Observation signal input module → Calibration condition start-stop identification module → Calibration data processing module

Calibration parameter download module ← Calibration parameter optimization module ← Multi-objective calculation module

Controller ← → Calibration tool → Observation signal input module

FIG. 4

FIG. 5

EP 4 425 110 A1

Obtain an observation signal of a to-be-tested system ⟶ S601

Calculate a corresponding performance index based on the observation signal of the to-be-tested system ⟶ S602

Obtain an updated calibration parameter by using an optimization algorithm based on the performance index, a constraint condition, and at least one objective function, where the objective function indicates a function relationship between performance indexes ⟶ S603

Send the updated calibration parameter to a controller ⟶ S604

FIG. 6

| Determine a type of a calibration parameter | S605 |

| Determine an initial coupling factor between calibration parameters based on the type of the calibration parameter and an initial value of the calibration parameter | S606 |

| Obtain an observation signal of a to-be-tested system | S601 |

| Calculate a corresponding performance index based on the observation signal of the to-be-tested system | S602 |

| Obtain an updated calibration parameter by using an optimization algorithm based on the performance index, a constraint condition, and at least one objective function, where the objective function indicates a function relationship between performance indexes | S603 |

| Send the updated calibration parameter to a controller | S604 |

FIG. 7

FIG. 8

FIG. 9

| | |
|---|---|
| Determine a type of a calibration parameter | S605 |

| | |
|---|---|
| Determine an initial coupling factor between calibration parameters based on the type of the calibration parameter and an initial value of the calibration parameter | S606 |

| | |
|---|---|
| Obtain an observation signal of a to-be-tested system | S601 |

| | |
|---|---|
| When the observation signal meets a first preset condition, perform data processing on the observation signal, and calculate a corresponding performance index based on a processed observation signal | S607 |

| | |
|---|---|
| Calculate a corresponding performance index based on the observation signal of the to-be-tested system | S602 |

| | |
|---|---|
| Obtain an updated calibration parameter by using an optimization algorithm based on the performance index, a constraint condition, and at least one objective function, where the objective function indicates a function relationship between performance indexes | S603 |

| | |
|---|---|
| Send the updated calibration parameter to a controller | S604 |

FIG. 10

| Determine a type of a calibration parameter | S605 |

| Determine an initial coupling factor between calibration parameters based on the type of the calibration parameter and an initial value of the calibration parameter | S606 |

| Obtain an observation signal of a to-be-tested system | S601 |

| When the observation signal meets a first preset condition, perform data processing on the observation signal, and calculate a corresponding performance index based on a processed observation signal | S607 |

| Calculate a corresponding performance index based on the observation signal of the to-be-tested system | S602 |

| Obtain an updated calibration parameter by using an optimization algorithm based on the performance index, a constraint condition, and at least one objective function, where the objective function indicates a function relationship between performance indexes | S603 |

| Send the updated calibration parameter to a controller | S604 |

| Generate exception alarm information when an exception occurs in a calibration process of the to-be-tested system, where the exception alarm information is used to prompt a user with the calibration exception | S608 |

FIG. 11

Determine a type of a calibration parameter — S605

Determine an initial coupling factor between calibration parameters based on the type of the calibration parameter and an initial value of the calibration parameter — S606

Obtain an observation signal of a to-be-tested system — S601

When the observation signal meets a first preset condition, perform data processing on the observation signal, and calculate a corresponding performance index based on a processed observation signal — S607

Calculate a corresponding performance index based on the observation signal of the to-be-tested system — S602

Obtain an updated calibration parameter by using an optimization algorithm based on the performance index, a constraint condition, and at least one objective function, where the objective function indicates a function relationship between performance indexes — S603

Send the updated calibration parameter to a controller — S604

Generate a calibration report when a value of the at least one objective function meets a second preset condition — S609

FIG. 12

FIG. 13

## INTERNATIONAL SEARCH REPORT

| International application No. |
| --- |
| **PCT/CN2021/131000** |

| A. | CLASSIFICATION OF SUBJECT MATTER |
| --- | --- |
| | G01D 18/00(2006.01)i |

According to International Patent Classification (IPC) or to both national classification and IPC

| B. | FIELDS SEARCHED |
| --- | --- |

Minimum documentation searched (classification system followed by classification symbols)

G01D

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 标定, 人工, 人为, 自动, 车, 约束条件, 贝叶斯, 粒子群, 遗传算法, 机器学习, 优化, 目标函数, 性能, 指标, calibration, artificial, man, automatic, vehicle, constraint condition, Bayes, particle population, genetic algorithm, machine learning, optimization, objective function, performance, index

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113340334 A (NEOLIX TECHNOLOGIES CO., LTD.) 03 September 2021 (2021-09-03) description, paragraphs [0016]-[0058] | 1-25 |
| X | CN 113479186 A (CATARC (TIANJIN) AUTOMOTIVE ENGINEERING RESEARCH INSTITUTE CO., LTD. et al.) 08 October 2021 (2021-10-08) description, paragraphs [0067]-[0171] | 1-25 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 June 2022** | **11 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2021/131000**

| Patent document cited in search report | | | Publication date (day/month/year) | Patent family member(s) | Publication date (day/month/year) |
|---|---|---|---|---|---|
| CN | 113340334 | A | 03 September 2021 | None | |
| CN | 113479186 | A | 08 October 2021 | None | |

Form PCT/ISA/210 (patent family annex) (January 2015)